# EUROPÄISCHE PATENTSCHRIFT

(11) **EP 2 768 720 B1**
(45) Veröffentlichungstag und Bekanntmachung des Hinweises auf die Patenterteilung: **12.07.2017**
(21) Anmeldenummer: 12778995.6
(22) Anmeldetag: 10.10.2012
(51) Int. Cl.: B62D 21/17, B60K 6/40, B60G 7/02, B60G 3/06, B60G 3/20, B60K 7/00, B60W 10/08

(54) **PERSONENKRAFTWAGEN SOWIE PERSONENKRAFTWAGENMODUL**
PASSENGER CAR AND PASSENGER CAR MODULE
VOITURE PARTICULIÈRE ET MODULE DE VOITURE PARTICULIÈRE

(30) Priorität: 18.10.2011 DE 102011054580
(43) Veröffentlichungstag der Anmeldung: 27.08.2014
(73) Patentinhaber: ThyssenKrupp Automotive Systems GmbH, 45145 Essen (DE); Siemens Aktiengesellschaft, 80333 München (DE)
(72) Erfinder: BRUNS, Sylke, 80637 München (DE); TROPOJA, Adrian, 97702 Münnerstadt (DE); SCHMIDT, Steffen, 51061 Köln (DE); KURZOK, Jan, R., 45359 Essen (DE)
(74) Vertreter: Lorenz, Bernd Ingo Thaddeus
(86) Internationale Anmeldenummer: PCT/EP2012/070014
(87) Internationale Veröffentlichungsnummer: WO 2013/057017

(56) Entgegenhaltungen:
- WO-A1-2009/017533
- WO-A2-2009/120463
- DE-A1-102011 012 249
- DE-U1- 20 122 798
- FR-A- 878 464
- FR-A1- 2 691 930
- US-A1- 2004 060 750
- US-A1- 2008 078 603
- US-A1- 2010 116 569
- US-A1- 2011 132 676

## Beschreibung

Die Erfindung betrifft einen Personenkraftwagen mit einer Karosserie, gemäß Oberbegriff des Anspruches 1. Bei der genannten Achse handelt es sich vorzugsweise um die Antriebsachse eines zweispurigen Fahrzeugs, wobei zur Abstützung auf der Fahrbahn zumindest ein weiteres Rad, üblicherweise zumindest eine weitere Achse vorgesehen ist. Grundsätzlich bezieht sich die Erfindung aber auch auf Personenkraftwagen, welche mehrere angetriebene Achsen, insbesondere einen Allradantrieb aufweisen. Die beschriebene Ausgestaltung der angetriebenen Achse kann dann bei einem Allradfahrzeug mit zwei Achsen an beiden Achsen oder nur an einer der beiden Achsen vorgesehen sein.
Die vorliegende Erfindung bezieht sich konkret auf Personenkraftwagen, wobei die Karosserie dazu vorgesehen ist, Personen aufzunehmen und zu schützen.

An die Konstruktion moderner Personenkraftwagen werden sehr hohe Anforderungen gestellt. So muss die Karosserie bei einer Kollision in der Lage sein, möglichst viel kinetische Energie in Formänderungsarbeit umzuwandeln, ohne dass eine Fahrgastzelle wesentlich verformt wird. Des Weiteren sind für den Fahrbetrieb eine hohe Steifigkeit, eine geringe Schwingungsneigung und eine hohe Betriebsfestigkeit anzustreben. Insbesondere sollte die gesamte Karosserie oder Teile der Karosserie nicht eine Eigenfrequenz aufweisen, die bei dem Fahrbetrieb leicht angeregt werden kann. Schließlich besteht das Bestreben im Falle einer Beschädigung der Karosserie eine möglichst einfache Reparatur zu ermöglichen.

Vor dem Hintergrund der beschriebenen Anforderungen haben sich in der Praxis selbsttragende Karosserien für Personenkraftwagen durchgesetzt. Hinsichtlich der Konstruktion und Fertigung moderner Personenkraftwagen stellt die Karosserie ein Modul dar, welches bei dem Zusammenbau mit weiteren Modulen wie der Vorderachse und der Hinterachse sowie dem Motor und den weiteren Anbauteilen kombiniert wird. Bei der Massenfertigung werden dabei in der Regel die einzelnen Module vorgefertigt und in einem fortlaufenden Prozess nacheinander zusammengefügt. Für den Motor wird dabei ein Motorraum in der Karosserie vorgesehen, in den der Motor bei der Montage eingesetzt wird, wobei der Motor über elastisch verformbare Motorlager an der Karosserie abgestützt ist. Die Abstützung über elastische Motorlager in der selbsttragenden Karosserie ist zweckmäßig, um bei einem plötzlichen Lastwechsel eine gewisse Bewegung des Motors zu ermöglichen und um Vibrationen, welche den Komfort des Personenkraftwagens erheblich beeinträchtigen können, von der Karosserie fernzuhalten.

Als weitere Module weisen moderne Personenkraftwagen eine Vorderachse und eine Hinterachse auf, die jeweils einen an der Karosserie befestigten Achsträger sowie daran über jeweils eine Lenkeranordnung angeschlossene Räder aufweisen. Bei der angetriebenen Achse sind die Räder über eine gelenkige Welle an eine Getriebeanordnung angeschlossen, welche üblicherweise ein Untersetzungsgetriebe sowie ein Differenzial aufweist. Während die gelenkigen Wellen dazu vorgesehen sind, die Antriebsenergie von dem Motor bzw. Getriebe auf die Antriebsräder zu übertragen, sind der Motor und die angetriebene Fahrzeugachse über die zwischengeschaltete Karosserie verbunden.

Eine Achskonstruktion für einen Personenkraftwagen ist aus der DE 10 2004 022 242 A1 bekannt. Ein mit der beschriebenen Achskonstruktion ausgerüsteter Personenkraftwagen weist eine Karosserie, einen Motor und eine Fahrzeugachse auf, welche einen mit der Karosserie verbundenen Achsträger und daran zwei seitlich über jeweils eine Verbindungsanordnung beweglich angeschlossene Räder aufweist. Die Verbindungsanordnung umfasst eine Lenkeranordnung, mit der die Räder bezogen auf einen Untergrund in vertikaler Richtung beweglich sind, um ein Einfeder zu ermöglichen. Darüber hinaus umfasst die Verbindungsanordnung auch eine Spurstangenanordnung, mit der der Einschlagwinkel der Räder zur Steuerung des Personenkraftwagens einstellbar ist. Der Motor weist ein kreiszylindrisches oder im Wesentlichen kreiszylindrisches Gehäuse auf und überbrückt lediglich einen mittleren Abschnitt des Achsträgers. Wesentliche weitere Bestandteile des Achsträgers sind an den Stirnseiten des Gehäuses geordnete Bauteile, mit denen der Achsträger an einer Karosserie befestigt werden kann und an dem die Verbindungsanordnung befestigt ist. Es ergibt sich zusätzlich der Vorteil, dass für unterschiedliche Fahrzeugplattformen in ihrer Konstruktion angepasste seitliche Bauteile eingesetzt werden können.

Eine Achskonstruktion für einen Personenkraftwagen gemäß dem Oberbegriff des Patentanspruches 1 ist aus FR 2 691 930 A1 bekannt. Die Lenkeranordnung ist sowohl an dem Gehäuse des Motors als auch unmittelbar an der Karosserie befestigt, wodurch Querkräfte in einem erheblichen Teil auch direkt auf die Karosserie übertragen werden.

Vor diesem Hintergrund liegt der Erfindung die Aufgabe zugrunde, die Stabilität und Steifigkeit des Achsträgers zu erhöhen.

Gemäß der vorliegenden Erfindung ist der Motor als tragendes und zumindest Querkräfte übertragendes Teil in die Antriebsachse integriert. Während bei einem herkömmlichen Personenkraftwagen die Querbrücken des Achsträgers nur zur Bereitstellung einer stabilen Fahrzeugachse vorgesehen sind, kommt dem Gehäuse des Motors eine Doppelfunktion zu. Dabei nutzt die Erfindung die Erkenntnis, dass das Gehäuse des Motors üblicherweise ohnehin eine große Festigkeit aufweisen muss, um einen Verbrennungsmotor oder eine elektrische Maschine als Antrieb für den Personenkraftwagen aufzunehmen. Diese Stabilität des Gehäuses wird erfindungsgemäß auch dazu genutzt, um zumindest einen Teil der Querkräfte, die auf den Achsträger wirken, zu übertragen. Das beschriebene Konzept ist sowohl für eine angetriebene Vorderachse als auch für eine angetriebene Hinterachse einsetzbar. Erfindungsgemäß dient das Gehäuse nicht nur zur Aufnahme des Motors sondern auch zur Befestigung des gesamten Achsträgers an der Karosserie. Die vorliegende Erfindung lehrt damit, dass eine spezielle Gehäuseform vorzusehen ist, welche auch den mechanischen Anforderungen für eine Befestigung Rechnung trägt. Durch das Gehäuse als massives, tragendes Bauteil wird durch die einstückige Ausgestaltung eine höhere Stabilität und Steifigkeit erreicht. Es ergibt sich eine Reduzierung der insgesamt miteinander zu verbindenden Teile, so dass auch potentielle Schwachstellen vermieden werden. Auch wenn durch die einstückige Ausgestaltung des Gehäuses das Gehäuse selbst aufwendiger herzustellen ist, ergibt sich insgesamt auch ein reduzierter Montageaufwand. Auf eine modulare Bauweise wird gemäß der vorliegenden Erfindung bewusst verzichtet, um verbesserte mechanische Eigenschaften zu erreichen. Fahrantriebe oder Stellantriebe werden bei Kraftfahrzeugen möglicherweise über elastische Verbindungselemente in Form von Lagern, Puffern oder dergleichen an die Karosserie angeschlossen, um eine Geräuschübertragung sowie die Übertragung von Vibrationen und Schwingungen von dem motorischen Antrieb auf die Fahrgastzelle der Karosserie zu vermeiden. Gemäß der DE 10 2004 022 242 A1 ist das Gehäuse des Motors zumindest durch die seitlichen Bauteile von der Karosserie getrennt. Die vorliegende Erfindung lehrt dagegen eine direkte Befestigung des Gehäuses an der Karosserie, wobei in Kauf genommen wird, dass die Übertragung von Geräuschen und Vibrationen gegebenenfalls durch andere Maßnahmen zu unterdrücken ist.

Ausgehend von einem herkömmlichen Achsträger mit einer vorderen Querbrücke und einer hinteren Querbrücke können durch die erfindungsgemäß vorgesehene Abstützung der Querkräfte über das Gehäuse des Motors beide Querbrücken weggelassen werden. Die Befestigung des gesamten Achsträgers an der Karosserie erfolgt stets über das Gehäuse, unabhängig davon, ob eine weitere Querbrücke vorgesehen ist.

Die vorliegende Erfindung ist in besonderem Maße für die Integration eines Elektromotors geeignet, weil dieser in einem kompakten, festen Gehäuse angeordnet werden kann. Alternativ ist aber grundsätzlich auch die Integration eines Verbrennungsmotors in die Antriebsachse nach dem erfindungsgemäßen Konzept möglich, wobei dann der Motorblock das Gehäuse des Motors bildet.

Bei dem beschriebenen Motor kann es sich um den einzigen Antriebsmotor des Personenkraftwagens oder auch einen Zusatzmotor handeln. Das beschriebene Konzept ist besonders geeignet für Fahrzeuge mit Hybridantrieb, wobei der in die Fahrzeugachse integrierte Motor ein Elektromotor ist und je nach Gegebenheiten als Zusatzmotor bzw. als ausschließlicher Antriebsmotor dient. Bei Hybridfahrzeugen ist vorzugsweise im städtischen Bereich und bei Kurzstrecken ein Antrieb ausschließlich durch den Elektromotor vorgesehen, wobei der Verbrennungsmotor bei langen Strecken oder hohen Geschwindigkeiten zugeschaltet wird bzw. als ausschließliche Antriebsquelle dient. Durch die Integration des Elektromotors in die Achse kann der Bauraum minimiert werden.

Das ist insbesondere bei Hybridfahrzeugen von Vorteil, weil auch für die Akkumulatoren weiterer Bauraum verlorengeht, der ansonsten für einen Gepäckraum oder die Fahrgastzelle benutzt werden kann. Wenn ein rein elektrischer Antrieb vorgesehen ist, kann eine der Fahrzeugachsen oder auch beide Fahrzeugachsen mit dem integrierten Motor ausgerüstet sein. Bei einem Elektromotor ergibt sich auch der Vorteil, dass dieser beim Abbremsen als Generator zur Energierückgewinnung eingesetzt werden kann. Neben einem reinen Elektrofahrzeug oder einem Hybridfahrzeug ist auch eine Ausgestaltung möglich, bei der ein Verbrennungsmotor nicht für den direkten Antrieb sondern zur Stromerzeugung für einen Generator genutzt wird, wobei die so gewonnene elektrische Energie direkt für den Elektromotor genutzt oder in Akkumulatoren zwischengespeichert wird. Diese Technologie wird auch als "Range-Extender-Technologie" bezeichnet.

Bei einer Ausgestaltung als Elektromotor kann dieser beispielsweise als Asynchronmotor mit Käfigläufer oder als Synchronmotor mit elektrischer Erregung oder Erregung durch Permanentmagnete ausgeführt sein. Zweckmäßigerweise erfolgt eine Luft- und/oder Wasserkühlung. Im Rahmen der Erfindung kann vorgesehen sein, dass die Achse aus zwei jeweils einem Antriebsrad zugeordneten seitlichen Achsabschnitten und dem Motor gebildet ist, wobei das Gehäuse des Motors die einzige Querbrücke zwischen den seitlichen Achsabschnitten ist. Auf das Konzept eines üblicherweise rahmenförmigen Achsträgers wird dann komplett verzichtet, wobei sämtliche auf die angetriebene Fahrzeugachse wirkenden Querkräfte über das Gehäuse des Motors abgeleitet werden.

Der Motor ist in einer Draufsicht auf die Achse, das heißt bei dem montierten Fahrzeug in einer Ansicht senkrecht zur Fahrbahn, entlang einer Verbindungslinie zwischen den beiden Antriebsrädern angeordnet, so dass das Gehäuse des Motors als Querbrücke den größten Teil der auf den Achsträger wirkenden Querkräfte oder, falls kein weiterer Querträger vorhanden ist, sämtliche auf den Achsträger wirkenden Querkräfte überträgt.

Eine weitere Vereinfachung kann erreicht werden, wenn die Lenkeranordnungen jeweils unmittelbar an dem Gehäuse des Motors bzw. an dem Motor angeschlossenen Befestigungselementen abgestützt sind. Bei einer Ausgestaltung der Lenkeranordnung als Mehrfachlenker sind also die einzelnen Lenker des Mehrfachlenkers an mehreren voneinander beabstandeten Stellen direkt an das Gehäuse des Motors angeschlossen.

Erfindungsgemäß ist der Motor dazu vorgesehen, die auf den Achsträger wirkenden Querkräfte zumindest zu einem Teil zu übertragen. Aufgrund der stabilen Bauweise des Gehäuses kann dieses aber auch dazu benutzt werden die Längskräfte zu übertragen, weil die gesamte Fahrzeugachse über das Gehäuse des Motors an der Karosserie abgestützt ist.

Unabhängig von der Befestigung der Fahrzeugachse an der Karosserie sind die Antriebsräder üblicherweise durch eine Feder-/Dämpfungsanordnung abgestützt, wobei die Abstützung über ein Federbein direkt an der Karosserie erfolgen kann. Hier ergibt sich der Vorteil, dass die Position des in die Achse integrierten Motors, abgesehen von Verwindungen der Karosserie oder einer Beweglichkeit an den Befestigungen (z. B. in Gummilagern), gegenüber der Karosserie genau festgelegt ist.

Die Fahrzeugachse ist im Rahmen der Erfindung üblicherweise an der Unterseite der Karosserie befestigt, wobei die Befestigung an tragenden Längsträgern der Karosserie erfolgen kann.

Unabhängig von der Ausgestaltung als Verbrennungsmaschine oder Elektromotor kann das Gehäuse des Motors ein Differenzial und/oder ein Getriebe aufweisen. Während das Differenzial dazu vorgesehen ist, bei Kurvenfahrten eine unterschiedliche Geschwindigkeit der einzelnen Antriebsräder zu ermöglichen, dient das Getriebe dazu einen Drehmoment und Drehzahlumwandlung zwischen Antrieb und Abtrieb zu erreichen. Dabei sind sämtliche bekannte Getriebearten wie ein Doppelkupplungsgetriebe, ein Automatikgetriebe, ein Schaltgetriebe, ein elektronisch gesteuertes Schaltgetriebe oder ein stufenloses Getriebe (CVT) geeignet.

Insbesondere bei Elektromotoren sind aber auch Ausgestaltungen denkbar, die ohne ein Getriebe und/oder ein Differenzial auskommen. So kann beispielsweise vorgesehen sein, dass der Elektromotor zwei in dem Gehäuse aufgenommene, unabhängig voneinander steuerbare Rotoren aufweist, die jeweils einem der Antriebsräder zugeordnet sind. Um eine getrennte Ansteuerung zu ermöglichen, sind in dem Gehäuse auch zwei voneinander getrennte elektrische Statoren notwendig. Durch eine entsprechende Steuerung der beiden voneinander unabhängigen Rotoren kann die Funktion eines Differenzialgetriebes elektronisch nachempfunden werden, wodurch sich eine weitere Vereinfachung und Gewichtsersparnis ergibt. Die Steuerungsmöglichkeiten auf schlechtem Untergrund wie Schnee oder Eis sind weitreichender als bei einem üblichen Differenzial.

Die angetriebene Fahrzeugachse mit dem integrierten Motor ist eine Halbstarrachse oder vorzugsweise eine Achse mit Einzelradaufhängung, wobei als Lenkeranordnung insbesondere jeweils ein Querlenker in Verbindung mit einem McPherson-Federbein, ein Doppellenker oder ein Mehrfachlenker mit Längs-und Querlenkern sein kann. Hinsichtlich der Auswahl der Lenkeranordnung ergeben sich durch die erfindungsgemäße Ausgestaltung keine wesentlichen Einschränkungen.

Gegenstand der Erfindung ist auch ein Personenkraftwagenmodul gemäß Anspruch 9. Bei der Montage des Personenkraftwagens wird das beschriebene Personenkraftwagenmodul als vorgefertigte Einheit über das Gehäuse an der Karosserie befestigt. Des Weiteren werden dann noch die Antriebsräder selbst, d. h. also die Felgen mit den darauf aufgezogenen Reifen an den Antriebsradträgern befestigt. Bezüglich bevorzugten Ausgestaltungen des Personenkraftwagenmoduls wird auf die obigen Erläuterungen zu dem erfindungsgemäßen Personenkraftwagen verwiesen.

Die Erfindung wird im Folgenden anhand einer lediglich ein Ausführungsbeispiel darstellenden Zeichnung erläutert. Es zeigen:
- **Fig. 1**: eine angetriebene Hinterachse eines Personenkraftwagens,
- **Fig. 2**: eine Vorderachse eines Personenkraftwagens.

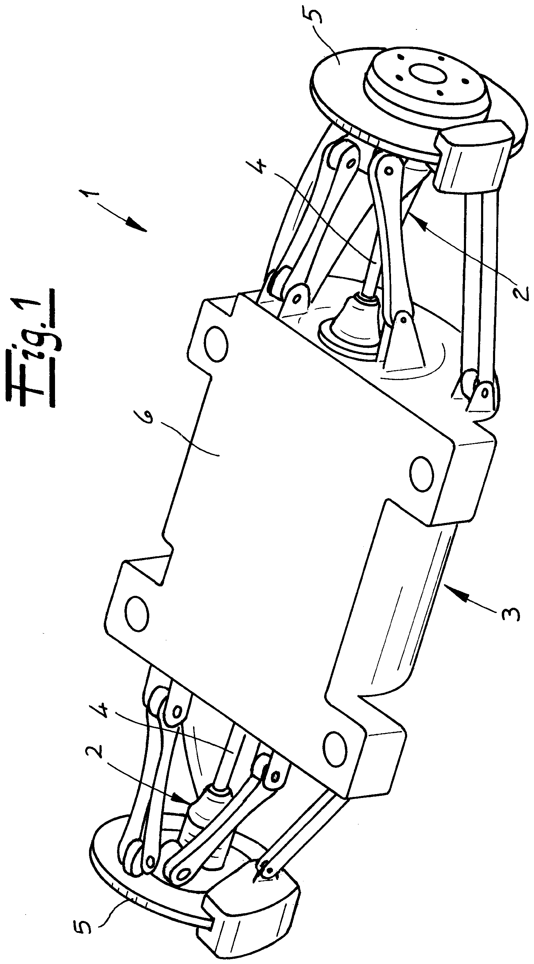

Die Fig. 1 zeigt ein Personenkraftwagenmodul in Form einer Fahrzeugachse. Die Fahrzeugachse wird an einer Karosserie des Personenkraftwagens befestigt, wobei die Fahrzeugachse, in dem Ausführungsbeispiel eine angetriebene Hinterachse, einen mittigen Achsträger 1 und daran zwei seitlich über jeweils eine Lenkeranordnung 2 angeschlossene von einem Motor 3 über jeweils eine gelenkige Welle 4 angetriebene Antriebsräder aufweist. Zum Zwecke der Übersichtlichkeit sind in der Fig. 1 nur die Antriebsradträger 5 mit einer Radnabe und einer Bremsscheibe dargestellt, an die die Antriebsräder mit ihrer Felge und ihrem Reifen angeschraubt werden.

Erfindungsgemäß ist ein Gehäuse 6 des Motors 3 eine Querkräfte übertragende Querbrücke des Achsträgers 1. Der Motor 3 mit seinem Gehäuse 6 dient als einziges zur Übertragung von Querkräften vorgesehenes Element, wobei die Lenkeranordnungen 2 jeweils direkt an dem Motorgehäuse abgestützt sind. Zu erkennen ist auch, dass das gesamte Personenkraftwagenmodul an dem Gehäuse 6 des Motors 3 mit der Karosserie verschraubt ist, so dass nicht nur die Querkräfte, sondern auch sämtliche Längskräfte über das Gehäuse 6 abgestützt sind.

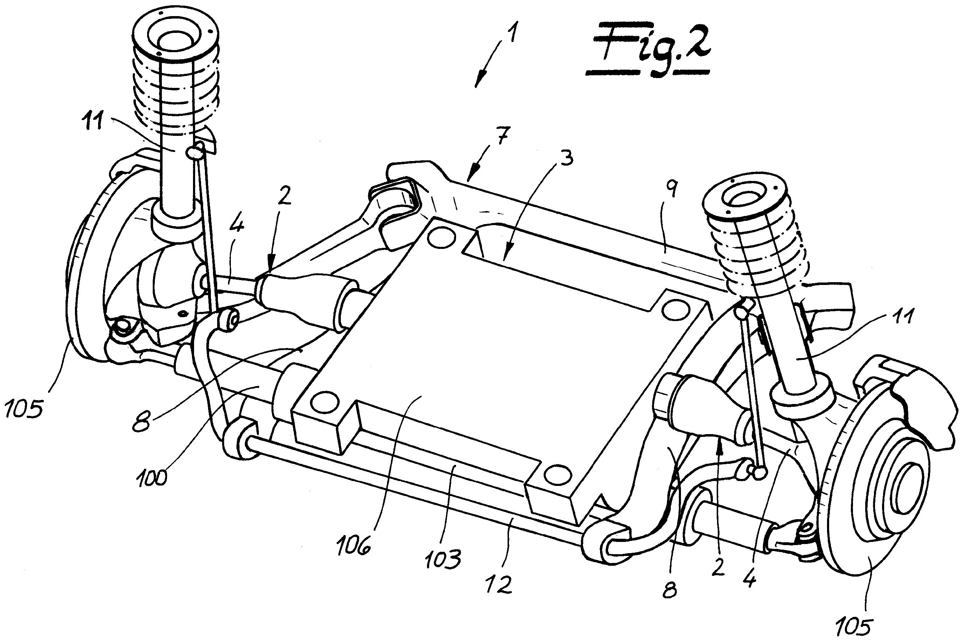

Die Fig. 2 zeigt eine Vorderachse eines Personenkraftwagens. Demnach besteht im Rahmen der Erfindung auch die Möglichkeit, ein Lenkgetriebe in eine Gehäuse 106 zu integrieren, das einen Motor 103 als Antrieb für einen Lenkaktuator aufnimmt und welches auch ein Differenzial- oder Untersetzungsgetriebe enthalten kann.

Auch gemäß der Fig. 2 erfolgt die Befestigung des Achsträgers 1 über das Gehäuse 106. Zusätzlich ist zur weiteren Verstärkung ein Rahmen 7 mit seitlichen Längsträgern 8 und einer hinteren Querbrücke 9 vorgesehen. Die Querkräfte werden dabei sowohl von dem Gehäuse 106 und der Querbrücke 9 aufgenommen. In dem Ausführungsbeispiel ist in dem Gehäuse 106 neben dem Motor 103 als Antrieb für den Lenkaktuator auch ein Motor 3 angeordnet, der für den Antrieb der Räder vorgesehen ist.

Mit Hilfe der Antriebsenergie des Motors 103 für den Lenkaktuator werden entsprechend den Lenkvorgaben des Fahrzeugsführers Spurstangen 100 in ihrer Längsrichtung verschoben, wobei Radträger 105 in die gewünschte Position verschwenkt werden.

Gemäß dem üblichen Aufbau weist das Personenkraftwagenmodul auch Federbeine 11 zur Abstützung und Dämpfung der Antriebsräder an der Karosserie sowie einen Stabilisator 12 auf.

## Patentansprüche

1. Personenkraftwagen mit einer Karosserie, einem Motor (3, 103) und einer Fahrzeugachse, welche einen mit der Karosserie verbundenen Achsträger (1) und daran zwei seitlich über jeweils eine Verbindungsanordnung beweglich angeschlossene Räder aufweist, wobei die Räder über die Verbindungsanordnung durch den Motor (3, 103) bewegbar sind, wobei ein Gehäuse (6, 106) des Motors (3, 103) eine Querkräfte übertragende Querbrücke des Achsträgers (1) bildet, wobei der Achsträger (1) über das Gehäuse (6, 106) des Motors (3) an der Karosserie befestigt ist, wobei
die Verbindungsanordnung zumindest von einer Lenkeranordnung (2) gebildet ist und wobei Räder als Antriebsräder über jeweils eine gelenkige Welle (4) von dem Motor (3) angetrieben sind,
die Lenkeranordnungen (2) unmittelbar an dem Gehäuse (6) des Motors (3) bzw. an dem Motor angeschlossenen Befestigungselementen abgestützt sind und
die Fahrzeugachse aus zwei jeweils einem Rad zugeordneten seitlichen Achsabschnitten und dem Motor (3, 103) gebildet ist, wobei das Gehäuse (6, 106) des Motors (3, 103) die einzige Querbrücke zwischen den seitlichen Achsabschnitten ist.

2. Personenkraftwagen nach Anspruch 1, **dadurch gekennzeichnet, dass** die Lenkeranordnung (2) als Querlenker oder als Mehrfachlenker ausgestattet ist.

3. Personenkraftwagen nach Anspruch 1 oder 2, **dadurch gekennzeichnet, dass** die Verbindungsanordnung zumindest von einer Spurstangenanordnung (100) gebildet ist, wobei die Räder über die Spurstangenanordnung (100) von dem Motor (103) in ihrer Ausrichtung verstellbar sind.

4. Personenkraftwagen nach einem der Ansprüche 1 bis 3, **dadurch gekennzeichnet, dass** der Motor (3, 103) in einer Draufsicht auf die Fahrzeugachse entlang einer Verbindungslinie zwischen den beiden Rädern liegt und so als Querbrücke den größten Teil der auf den Achsträger (1) wirkenden Querkräfte oder sämtliche auf den Achsträger (1) wirkenden Querkräfte überträgt.

5. Personenkraftwagen nach einem der Ansprüche 1 bis 4, **dadurch gekennzeichnet, dass** der Motor (3, 103) ein Elektromotor ist.

6. Personenkraftwagen nach Anspruch 5, **dadurch gekennzeichnet, dass** der Elektromotor zwei in dem Gehäuse (6, 106) aufgenommene, unabhängig voneinander ansteuerbare Rotoren aufweist, die jeweils einem der Räder zugeordnet sind.

7. Personenkraftwagen nach einem der Ansprüche 1 bis 6, **dadurch gekennzeichnet, dass** in dem Gehäuse (6, 106) ein Differenzial und/oder ein Getriebe aufgenommen ist.

8. Personenkraftwagen nach einem der Ansprüche 1 bis 7, **dadurch gekennzeichnet, dass** die Fahrzeugachse an einer Unterseite der Karosserie befestigt ist.

9. Personenkraftwagenmodul für einen Personenkraftwagen nach einem der Ansprüche 1 bis 8, mit einem an einer Karosserie befestigbaren Achsträger (1) und mit zwei seitlich an dem Achsträger (1) über jeweils eine Verbindungsanordnung beweglich angeschlossenen Radträger (5), wobei ein Gehäuse (6, 106) eines Motors (3, 103) eine Querkräfte übertragende Querbrücke des Achsträgers (1) bildet und wobei die Antriebsradträger (5) jeweils über die Verbindungsanordnung durch den Motor (3, 103) bewegbar sind, **dadurch gekennzeichnet, dass** der Achsträger (1) dazu eingerichtet ist über das Gehäuse (6, 106) des Motors (3, 103) an der Karosserie befestigt zu werden.

## Claims

1. A passenger car with a car body, an engine (3, 103) and a vehicle axle, which comprises a subframe (1) connected to the car body and two wheels laterally movably connected thereto via a respective connection arrangement, wherein the wheels can be moved by the engine (3, 103) via the connection arrangement, wherein a housing (6,106) of the engine (3, 103) forms a transverse-forces-transmitting cross-member of the subframe (1), wherein the subframe (1) is attached to the car body via the housing (6, 106) of the engine (3), wherein
the connection arrangement is formed by at least one control arrangement (2) and wherein wheels as drive wheels are each driven by the engine (3) via an articulated shaft (4),
the control arrangements (2) are supported directly against the housing (6) of the engine (3) or against fastening elements connected to the engine, and
the vehicle axle is formed by two lateral axle sections associated with a wheel each and the engine (3, 103), wherein the housing (6, 106) of the engine (3) is the sole cross-member between the lateral axle sections.

2. The passenger car according to claim 1, **characterised in that** the control arrangement (2) is configured as a transverse control arm or multi-control arm.

3. The passenger car according to claim 1 or 2, **characterised in that** the connection arrangement is formed at least by a track rod arrangement (100), wherein the wheels can be adjusted in their alignment by the engine (103) via the track rod arrangement (100).

4. The passenger car according to one of claims 1 to 3, **characterised in that** the engine (3, 103), when looking onto the vehicle axle from above, extends along a connecting line between the two wheels, thereby, as a cross-member, transmitting the major part of the transverse forces or all transverse forces acting on the subframe (1).

5. The passenger car according to one of claims 1 to 4, **characterised in that** the engine (3, 103) is an electric motor.

6. The passenger car according to claim 5, **characterised in that** the electric motor has two independently controllable rotors received in the housing (6, 106), each of which is associated with one of the wheels.

7. The passenger car according to one of claims 1 to 6, **characterised in that** a differential and/or a gear is received in the housing (6, 106).

8. The passenger car according to one of claims 1 to 7, **characterised in that** the vehicle axle is attached to an underside of the car body.

9. A passenger car module for a passenger car according to one of claims 1 to 8, with a subframe (1) attachable to a car body and two wheel carriers (5) each laterally movably attached to the subframe (1) via a connection arrangement, wherein a housing (6, 106) of an engine (3, 103) forms a transverse-forces-transmitting cross-member of the subframe (1), and wherein the drive wheel carriers (5) can each be moved by the engine (3, 103) via the connection arrangement, **characterised in that** the subframe (1) is adapted to be attached to the car body via the housing (6, 106) of the engine (3, 103).

## Revendications

1. Voiture particulière avec une carrosserie, un moteur (3, 103), et un essieu de véhicule qui présente un support d'essieu (1) relié à la carrosserie et deux roues qui y sont raccordées latéralement de manière mobile via respectivement un système de liaison, dans lequel les roues peuvent se mouvoir grâce au moteur (3, 103) par l'intermédiaire du système de liaison, dans laquelle un carter (6, 106) du moteur (3, 103) forme un pont transversal transmettant des forces transversales du support d'essieu (1), dans laquelle le support d'essieu (1) est fixé à la carrosserie via le carter (6, 106) du moteur (3),
dans laquelle le système de liaison est formé au moins par un système de bras oscillants transversaux (2) et dans laquelle des roues sont entraînées par le moteur (3) en tant que roues d'entraînement via respectivement un arbre articulé (4),
les systèmes de bras oscillants (2) étant directement supportés au niveau du carter (6) du moteur (3) ou au niveau des éléments de fixation raccordés au moteur, et
l'essieu de véhicule étant formé par deux segments d'essieu latéraux respectivement associés à une roue et par le moteur (3, 103), dans laquelle le carter (6, 106) du moteur (3, 103) est le seul pont transversal entre les segments d'essieu latéraux.

2. Voiture particulière selon la revendication 1, **caractérisée en ce que** le système de bras oscillants transversaux (2) est réalisé en tant que bras transversaux ou en tant que bras multiples.

3. Voiture particulière selon la revendication 1 ou 2, **caractérisée en ce que** le système de liaison est formé au moins par un système de barre d'accouplement (100), dans laquelle les roues peuvent être réglées par le moteur (103) concernant leur orientation par l'intermédiaire du système de barre d'accouplement (100).

4. Voiture particulière selon l'une des revendications 1 à 3, **caractérisée en ce que**, en vue de dessus sur l'essieu de véhicule, le moteur (3, 103) se situe le long d'une ligne de liaison entre les deux roues et transmet ainsi en tant que pont transversal la plus grande partie des forces transversales s'exerçant sur le support d'essieu (1) ou bien l'ensemble des forces transversales s'exerçant sur le support d'essieu (1).

5. Voiture particulière selon l'une des revendications 1 à 4, **caractérisée en ce que** le moteur (3, 103) est un moteur électrique.

6. Voiture particulière selon la revendication 5, **caractérisée en ce que** le moteur électrique présente deux rotors pouvant être commandés indépendamment l'un de l'autre, logés dans le carter (6, 106), lesquels sont respectivement associés à l'une des roues.

7. Voiture particulière selon l'une des revendications 1 à 6, **caractérisée en ce qu'**un différentiel et/ou une boîte de vitesses est logé(e) dans le carter (6, 106).

8. Voiture particulière selon l'une des revendications 1 à 7, **caractérisée en ce que** l'essieu de véhicule est fixé sur un dessous de la carrosserie.

9. Module de voiture particulière pour une voiture particulière selon l'une des revendications 1 à 8, avec un support d'essieu (1) pouvant être fixé sur une carrosserie et avec deux porte-roues (5) raccordés latéralement, de façon mobile, au support d'essieu (1) respectivement par l'intermédiaire d'un système de liaison, dans lequel un carter (6, 106) d'un moteur (3, 103) forme un pont transversal transmettant des forces transversales du support d'essieu (1) et dans lequel les porte-roues d'entraînement (5) peuvent se mouvoir grâce au moteur (3, 103) respectivement par l'intermédiaire du système de liaison,
**caractérisé en ce que** le support d'essieu (1) est étudié pour être fixé à la carrosserie via le carter (6, 106) du moteur (3, 103).
